# EUROPEAN PATENT APPLICATION

(11) **EP 4 498 505 A1**
(43) Date of publication of application: **29.01.2025**
(21) Application number: 24763285.4
(22) Date of filing: 04.03.2024
(51) Int. Cl.: H01M 50/533

(54) **FULL-TAB NEGATIVE ELECTRODE SHEET AND CYLINDRICAL BATTERY**

(30) Priority: 02.03.2023 CN 202320377096 U
(71) Applicant: Eve Energy Co., Ltd., Huizhou, Guangdong 516006 (CN)
(72) Inventor: XIN, Hao, Huizhou, Guangdong 516006 (CN); LIU, Shengqi, Huizhou, Guangdong 516006 (CN); SONG, Pengyuan, Huizhou, Guangdong 516006 (CN)
(74) Representative: Murgitroyd & Company
(86) International application number: PCT/CN2024/079890
(87) International publication number: WO 2024/179605

(57) **Abstract**

Disclosed are an all-tab negative electrode sheet and a cylindrical battery. The all-tab negative electrode sheet includes an electrode sheet body. The electrode sheet body, a separator, and a positive electrode sheet are stacked and wound to form a core. The electrode sheet body includes: a coating area, the electrode sheet body in the coating area being coated with a negative electrode material; a flattening area adjacent to the coating area in a width direction of the electrode sheet body, the width direction being perpendicular to the length direction, wherein (N+1) tab groups are arranged in the flattening area in sequence along the length direction, each of the tab groups comprises one or more tabs, a (N+1)^{th} tab group is adjacent to a N^{th} tab group, a width of the tabs of the (N+1)^{th} tab group is greater than that of the tabs of the N^{th} tab group, and N is a positive integer. A difference in width between the tabs of the (N+1)^{th} tab group and the tabs of a first tab group is equal to a radius value of the core. The width of the tabs in the flattening area of the present application increases stepwise. After winding, the tabs can be buckled and folded inwardly toward the center of the core, stacked together, and directly welded to the negative electrode case.

## Description

This application claims priority to Chinese Patent Application No. 2023203770968, filed on March 2, 2023, the contents of which are incorporated herein by reference in its entirety.

### TECHNICAL FIELD

The present disclosure relates to the field of power batteries, and more particularly, to an all-tab negative electrode sheet and a cylindrical battery.

### BACKGROUND

At present, current collectors close to negative electrodes of cylindrical all-tab batteries in the art are generally made of foil current collectors. The current collector is connected to a current collecting plate by a welding process, and then the current collecting plate is connected to a negative electrode case, instead of a side of the core close to the negative electrode being connected directly to the negative electrode case. As a result, it is required to apply more structural members in the cylindrical battery, leading to an increased cost. In addition, the welding for the current collecting plate of the negative electrode is needed in the process route, reducing productivity of the production line.

### SUMMARY

The present disclosure provides an all-tab negative electrode sheet and a cylindrical battery, which may solve the above technical problems.

According to the present disclosure, there is provided an all-tab negative electrode sheet including an electrode sheet body, wherein the electrode sheet body, a separator and a positive electrode sheet are stacked in sequence, and are wound along a length direction of the electrode sheet body to form a core, and the electrode sheet body includes a coating area, wherein the electrode sheet body in the coating area is coated with a negative pole material; a flattening area adjacent to the coating area in the width direction of the electrode sheet body, the width direction being perpendicular to the length direction, wherein (N+1) tab groups are arranged in the flattening area in sequence along the length direction, each of the tab groups includes one or more tabs, a (N+1)^{th} tab group is adjacent to a N^{th} tab group, a width of the tabs of the (N+1)^{th} tab group is greater than a width of the tabs of the N^{th} tab group, and N is a positive integer. A difference in width between the tabs of the (N+1)^{th} tab group and the tabs of the first tab group is equal to a radius value of the core.

The present disclosure also provides a cylindrical battery including a core, a negative electrode case, a current collecting plate, and an electrode pole. The core includes the all-tab negative electrode sheet according to any one of the above. A side of the core close to a positive electrode is connected to the electrode pole through the current collecting plate, and the all-tab negative electrode sheet of the core is connected to the negative electrode case.

### BENEFICIAL EFFECT

The present disclosure may have advantageous effects that the tabs of the all-tab negative electrode sheet of the present disclosure are directly welded to the bottom of the negative electrode case, so that the current collecting plate to be provided between the tabs and the negative electrode case can be removed, which reduces the internal structures of the battery, lowers the cost, lightens the single battery, and in turn reduces the overall weight of the integrated pack, achieving light of the application. In addition, the elimination of the current collecting plate between the tabs and the negative electrode case can reduce one welding process, shorten the time for producing the single battery, improve the production efficiency, prevent the separator from hot melting when the current collecting plate is welded, and improve the safety of the battery.

According to the cylindrical battery provided in the present disclosure, after winding, the tabs can be buckled and folded inwardly toward the center of the core and then stacked together, thereby solving the technical problem that the tabs of the negative electrode cannot be directly welded with the negative electrode case.

### BRIEF DESCRIPTION OF THE DRAWINGS

FIG. 1 is a schematic view of an all-tab negative electrode sheet according to an embodiment of the present disclosure.
FIG. 2 is a schematic view of an all-tab negative electrode sheet according to another embodiment of the present disclosure.
FIG. 3 is a schematic view of an all-tab negative electrode sheet according to another embodiment of the present disclosure.
FIG. 4 is a schematic view of an all-tab negative electrode sheet according to another embodiment of the present disclosure.

### List of reference numbers:

10. Electrode sheet body; 1. Coating area; 2. Flattering area; 21. Tabs; 3. Blank area.

### DETAILED DESCRIPTION OF EMBODIMENTS

In the following description of the present disclosure, unless otherwise expressly specified and defined, terms "connected/coupled", "connection", or "fixed" should be interpreted broadly, for example, as a fixed connection, a detachable connection, or an integral connection; as a mechanical connection or an electrical connection; or as a direct connection or an indirect connection by means of an intervening medium. The terms may further refer to internal communication of two elements, or interaction of two elements. Those skilled in the art can understand the specific meanings of the above terms in the present disclosure as needed.

In the present disclosure, unless otherwise expressly specified and defined, a first feature "on" or "under" a second feature may include that the first feature directly contacts the second feature, or that the first feature contacts the second feature via an additional feature there between instead of directly contacting the second feature. Moreover, the first feature "on", "above", and "over" the second feature may include that the first feature is right over or obliquely upward over the second feature or mean merely that the first feature has a horizontal height higher than that of the second feature. The first feature "under", "below", and "beneath" the second feature may include that the first feature is right beneath or obliquely downward beneath the second feature or mean merely that the first feature has a horizontal height lower than that of the second feature.

In the description of the present disclosure, terms "upper", "lower", "right", and other terms indicating orientations or position relationships are based on the orientations or position relationships illustrated in the drawings. The terms are used to facilitate and simplify the description of the present disclosure, rather than indicate or imply that the devices or elements referred to herein are required to have specific orientations or be constructed or operate in the specific orientations. Accordingly, the terms should not be construed as limiting the present disclosure. In addition, terms "first" or "second" are used only for descriptive purposes and have no special meaning.

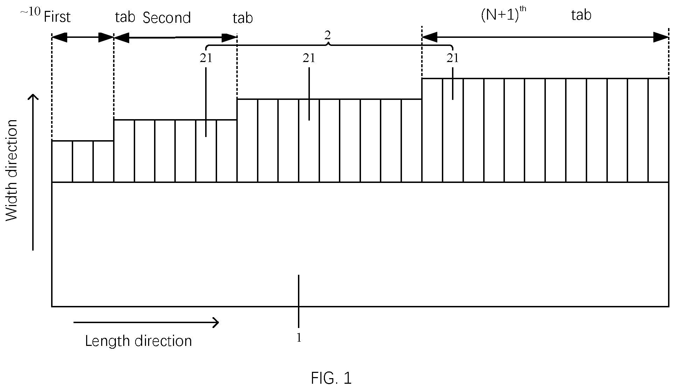

As shown in FIG. 1, a negative electrode sheet, a separator, and a positive electrode sheet are stacked in sequence, and then wound along a length direction of the negative electrode sheet to form a core. The negative electrode sheet includes an electrode sheet body 10. The electrode sheet body 10 includes a coating area 1 and a flattening area 2 which are provided in sequence in a width direction. The length direction of the electrode sheet body 10 is perpendicular to the width direction thereof. The electrode sheet body 10 in the coating area 1 is coated with a negative electrode material. (N+1) tab groups are arranged in the flattening area 2 in sequence along the length direction of the electrode sheet body 10, wherein N is a positive integer, and each of the tab groups includes one or more tabs 21. Each of the tabs 21 is connected to the electrode sheet body 10 in the coating area 1. The tabs 21 are configured to lead out the negative electrode.

A (N+1)^{th} tab group is adjacent to a (N)^{th} tab group, and a width of the tab(s) 21 of the (N+1)^{th} tab group is larger than a width of the tab(s) 21 of the (N)^{th} tab group. That is, the tabs 21 of a first tab group, a second tab group, ... , and the (N+1)^{th} tab group are arranged in sequence in the length direction, and the widths of the tabs 21 of different tab groups are increased in a stepped manner along the length direction.

In addition, after the winding to form the core, the tab(s) 21 of the first tab group is located close to the center of the core, and the tab(s) 21 of the (N+1)^{th} tab group is located at the periphery of the core. The tabs 21 in the flattening area 2 are buckled inwardly toward the center of the core and overlapped, and then are welded to the bottom of the negative electrode case. In order to ensure that the tabs 21 of different tab groups can be stacked in the same position, the width of the tab(s) 21 of the tab group that is farther away from the center of the core is larger, and the difference in width between the tab(s) 21 at the outermost periphery of the core (that is, in the (N+1)^{th} tab group) and the tab(s) 21 at the center of the core (that is, in the first tab group) is equal to a radius value of the core.

In some embodiments, all of the tabs 21 are connected to an edge of the electrode sheet body 10 in the coating area 1 at the same side thereof. Any two adjacent tabs 21 are not connected to each other in the length direction. That is, each tab 21 can be buckled and folded inwardly toward the center of the core around its connection with the electrode sheet body 10 in the coating area 1 without affecting other adjacent tabs 21.

In some embodiments, each of the tab groups corresponds to a part of the edge of the electrode sheet body 10 at the same side in the coating area 1, and a combination of all of the tab groups corresponds to the entire edge of the electrode sheet body 10 at the same side in the coating area 1. At least a part of the electrode sheet body 10 in the coating area 1 in the length range corresponding to any tab group is connected to the tab(s) 21.

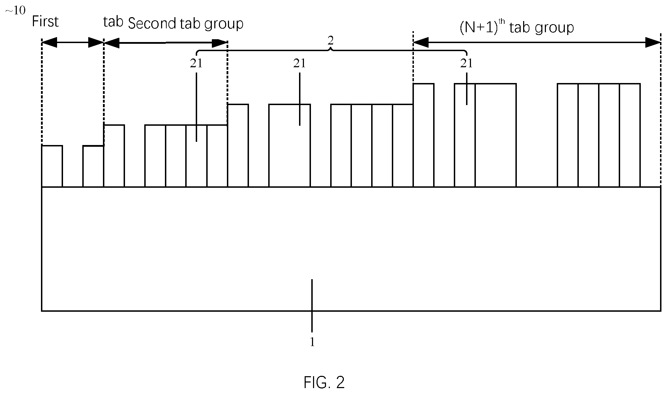

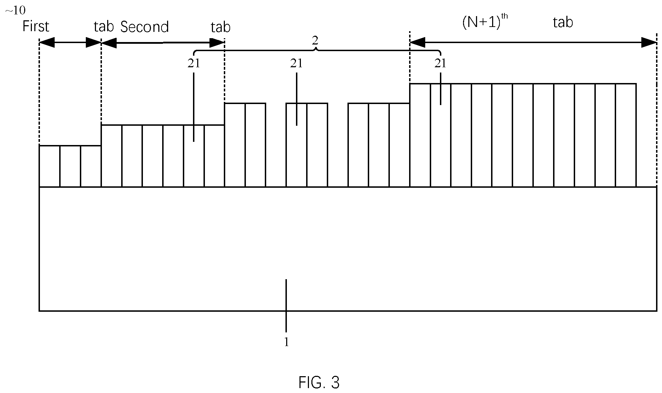

As shown in FIG. 1, the electrode sheet body 10 in the coating area 1 in an entire region of a length range corresponding to each tab group is connected to the tabs 21, that is, there is no gap between any two adjacent tabs 21. As shown in FIG. 2, the electrode sheet body 10 in the coating area 1 in a length range corresponding to each tab group has a region that is not connected to the tab(s) 21, that is, there is a gap between at least two adjacent tabs 21 of each tab group. In the case of the (N+1)^{th} tab group and the first tab group, the tab(s) 21 may be absent at the margin. As shown in FIG. 3, the electrode sheet body 10 in the coating area 1 in a length range corresponding to a part of the tab groups is connected to the tab(s) 21, and the electrode sheet body 10 in the coating area 1 in a length range corresponding to another part of the tab groups has a region that is not connected to the tab(s).

The number of the tabs 21 and the gap between adjacent tabs 21 provided within the electrode sheet body 10 in the coating area 1 in the length range corresponding to each tab group may be set as required, which is not specifically limited herein. It is to be noted that the entire region at the edge of the electrode sheet body 10 in the coating area 1 is connected to the tab(s) 21, leading to more uniform and comprehensive arrangement and better current conduction.

In some embodiments, all of the tabs 21 are welded to the bottom of the negative electrode case after being buckled and folded inwardly. In order to weld all of the tabs 21 to the bottom of the negative electrode case, all of the tabs 21 need to be overlapped after being buckled and folded inwardly. As the electrode sheet body 10 is wound, the farther away from the center of the core, the greater its width is required.

The electrode sheet body 10 in the coating area 1 and corresponding to the first tab group is formed into the innermost circle of the core (that is, the first circle), the electrode sheet body 10 in the coating area 1 and corresponding to the second tab group is formed into the second circle of the core, and so on, until the electrode sheet body 10 in the coating area 1 and corresponding to the (N+1)^{th} tab group is formed into the outermost circle of the core (that is, the (N+1)^{th} circle). The electrode sheet body in the coating area and corresponding to each tab group is the respective target electrode sheet body. If it is necessary to overlap all of the tabs 21 at the same place after being buckled and folded inwardly, the difference in width between the tab(s) 21 of the (N+1)^{th} tab group and the tab(s) 21 of the N^{th} tab group is a first interval value, which is an interval value between the target electrode sheet bodies of two adjacent tab groups in the core, i.e., an interval value between the target electrode sheet body of the (N+1)^{th} tab group and the target electrode sheet body of the N^{th} tab group.

In some embodiments, parts of the electrode sheet body 10 in the coating area 1 and respectively corresponding to the first tab group, the second tab group, ..., and the (N+1)^{th} tab group are sequentially formed into the first circle, the second circle, ..., and the (N+1)^{th} circle of the core. The closer to the outer circle, the longer the circumference of the circle, and the longer the length of the edge of the corresponding electrode sheet body 10 in the coating area 1, i.e., the longer the length of the corresponding tab group. In other words, the length of the (N+1)^{th} tab group is greater than the length of the (N)^{th} tab group. The specific length of each tab group depends on the distance of the tab group from the center of the core.

In some embodiments, since the core is formed by stacking the negative electrode sheet, the separator, and the positive electrode sheet in sequence and winding them in the length direction of the negative electrode sheet, a hollow cylindrical through-hole is generated in the center of the core. A projection of the cylindrical through-hole in the width direction is a central hole. Each of the tabs 21 can be buckled and folded inwardly toward the center of the core around its connection with the electrode sheet body 10 in the coating area 1. The tab(s) 21 of the first tab group are ones closest to the central hole. In order to prevent the tab(s) 21 of the first tab group after being buckled and folded with the other tabs 21, the width of the tabs 21 of the first tab group is less than the diameter of the central hole.

In addition, all of the tabs 21 are overlapped after being buckled and folded inwardly, and then welded to the bottom of the negative electrode case. In order to avoid damage to other members caused by welding, the welding sports are optimally provided at the center of the core. Therefore, the width of the tab(s) 21 of the first tab group is set to be equal to the radius value of the central hole. The top of the tab(s) 21 of the first tab group after being buckled and folded inwardly coincides with the center of the core, and is welded to the bottom of the negative electrode case during welding.

In some embodiments, the dimensions in width of the tabs 21 of the same tab group may be flexibly set as desired. If the welding spots of the tabs 21 with the negative electrode case are provided at the center of the core, since a part of the electrode sheet body 10 in the coating area 1 and corresponding to the tab(s) 21 of the same tab group has the same distance from the center of the core, the tab(s) 21 of the same tab group has the same width.

In addition, since the core formed by winding has a cylindrical shape, the corresponding tabs 21 are bent by a certain arc in the length direction. In order to facilitate the inner buckling and folding of the tabs 21, the length of each tab 21 is set on the basis of its position from the center of the core, and the length of the tabs 21 of the tab group close to the outer ring of the core is required to be lower. The length of the tabs 21 may be gradually increased from the first tab group to the (N+1)^{th} tab group, or the length of all the tabs 21 may be the same as the length of the first tab group, or the length of some of the tabs 21 may be the same as the length of some of the tabs 21 shown in FIG. 2, and the length of some of the tabs 21 may be different, which is not specifically limited in this embodiment.

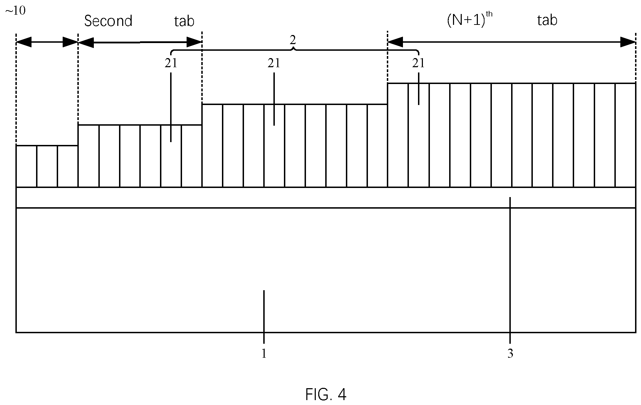

In some embodiments, a part of the negative electrode sheet is coated with the negative electrode material using a continuous coating process to form the coating area 1, and the remaining area at the side close to the collector is laterally die-cut to generate the tabs 21 of each of the tab groups, forming the flattening area 2. That is, the dividing line between the coating area and the non-coating area of the negative electrode material is the connection of the electrode sheet body 10 in the coating area 1 and the tabs 21 of each of the tab groups. In this case, the coating area 1 is easily damaged when the tabs 21 are die-cut, so there are high requirements for this process. As shown in FIG. 4, a blank area 3 is provided between the coating area 1 and the flattening area 2, and each of the tabs 21 is connected to the electrode sheet body 10 in the blank area 3. The blank area 3 is used as a transition area between the coating area 1 and the flattening area 2. The connection between the tabs 21 and the electrode sheet body 10 in the blank area 3 is the same as the connection between the tabs 21 and the electrode sheet body 10 in the coating area 1 as described in the above embodiments, which are not repeated in detail.

In the present embodiment, the tabs 21 of the negative electrode sheet are welded directly to the bottom of the negative electrode case, and the current collecting plate provided between the tabs 21 and the negative electrode case is eliminated, which reduces the internal structures of the battery, lowers the cost of the battery, and lightens the single battery, so that the overall weight of the integrated pack is reduced, and the application end is lightened. In addition, the current collecting plate between the tabs 21 and the negative electrode case is removed, which reduces one welding process, shortens the time for producing the single battery, improves the production efficiency, prevents the separator from hot melting when welding the current collecting plate, and improves the safety of the battery.

The present disclosure further provides a cylindrical battery comprising a core, a negative electrode case, a current collecting plate, and an electrode pole, wherein the core comprises the all-tab 21 negative electrode sheet according to any one of the above embodiments, a positive electrode of the core is connected to the electrode pole through the current collecting plate, and the all-tab 21 negative electrode sheet of the core is connected to the negative electrode case.

In an embodiment, each of the tabs 21 of the all-tab 21 negative electrode sheet is welded to a bottom of the negative electrode case.

In an embodiment, the all-tab 21 negative electrode sheet includes a electrode sheet body 10. The electrode sheet body 10, a separator, and a positive electrode sheet are stacked in sequence and wound along the length direction of the electrode sheet body 10 into a core. The electrode sheet body 10 includes:
a coating area 1 in which the electrode sheet body 10 i is coated with a negative electrode material;
a flattening area 2 adjacent to the coating area 1 in the width direction of the electrode sheet body 10, wherein the width direction is perpendicular to the length direction, (N+1) tab groups are arranged in the flattening area 2 in sequence along the length direction, each of the tab groups comprises one or more tabs 21, a (N+1)^{th} tab group is adjacent to a N^{th} tab group, a width of the tabs 21 of the (N+1)^{th} tab group is greater than a width of the tabs 21 of the N^{th} tab group, and N is a positive integer. A difference in width between the tabs 21 of the (N+1)^{th} tab group and the tabs 21 of a first tab group is equal to a radius value of the core

In an embodiment, each of the tabs 21 is connected to the electrode sheet body 10 in the coating area 1, and any two adjacent ones of the tabs 21 are not connected to each other in the length direction.

In an embodiment, at least a part of the electrode sheet body 10 in the coating area and corresponding to each of the tab groups is connected to the tabs 21.

In an embodiment, a difference in width between the tab(s)21 of the (N+1)^{th} tab group and the tab(s) 21 of the N^{th} tab group is a first interval value, the electrode sheet body in the coating area and corresponding to each of the tab groups is a respective target electrode sheet body, and the first interval value is an interval value between the target electrode sheet body of the (N+1)^{th} tab group and the target electrode sheet body of the N^{th} tab group in the core.

In an embodiment, the length of the (N+1)^{th} tab group is greater than the length of the (N)^{th} tab group.

In an embodiment, a hollow cylindrical through-hole is provided in the center of the core, a projection of the cylindrical through-hole in the width direction is a central hole, and the width of the tabs 21 of the first tab group is a radius value of the central hole.

In an embodiment, the tabs 21 of the same tab group have the same width.

In an embodiment, a blank area 3 is provided between the coating area 1 and the flattening area 2, and each of the tabs 21 is connected to the electrode sheet body 10 in the blank area 3.

## Claims

1. An all-tab negative electrode sheet comprising an electrode sheet body, wherein the electrode sheet body, a separator, and a positive electrode sheet are stacked in sequence, and are wound along a length direction of the electrode sheet body to form a core,
the electrode sheet body comprises:
a coating area, the electrode sheet body in the coating area being coated with a negative electrode material;
a flattening area adjacent to the coating area in a width direction of the electrode sheet body, the width direction being perpendicular to the length direction, wherein (N+1) tab groups are arranged in the flattening area in sequence along the length direction, each of the tab groups comprises one or more tabs, a (N+1)^{th} tab group is adjacent to a N^{th} tab group, a width of the tabs of the (N+1)^{th} tab group is larger than that of the N^{th} tab group, and N is a positive integer;
a difference in width between the tabs of the (N+1)^{th} tab group and the tabs of a first tab group is equal to a radius value of the core.

2. The all-tab negative electrode sheet according to claim 1, wherein each of the tabs is connected to the electrode sheet body in the coating area, and any two adjacent ones of the tabs are not connected to each other in the length direction.

3. The all-tab negative electrode sheet according to claim 2, wherein at least a part of the electrode sheet body in the coating area and corresponding to each of the tab groups is connected to the tabs.

4. The all-tab negative electrode sheet according to claim 1, wherein a difference in width between the tabs of the (N+1)^{th} tab group and the tabs of the N^{th} tab group is a first interval value, the electrode sheet body in the coating area and corresponding to each of the tab groups is a respective target electrode sheet body, and the first interval value is an interval value between the target electrode sheet body of the (N+1)^{th} tab group and the target electrode sheet body of the N^{th} tab group in the core.

5. The all-tab negative electrode sheet according to claim 4, wherein a length of the (N+1)^{th} tab group is larger than that of the N^{th} tab group.

6. The all-tab negative electrode sheet according to claim 5, wherein a hollow cylindrical through-hole is provided in a center of the core, a projection of the cylindrical through-hole in the width direction is a central hole, and a width of the tabs of the first tab group is equal to a radius value of the central hole.

7. The all-tab negative electrode sheet according to any one of claims 1 to 6, wherein the tabs of a same tab group have a same width.

8. The all-tab negative electrode sheet according to any one of claims 1 to 6, wherein a blank area is disposed between the coating area and the flattening area, and each of the tabs is connected to the electrode sheet body in the blank area.

9. A cylindrical battery comprising a core, a negative electrode case, a current collecting plate, and an electrode pole, wherein the core comprises the all-tab negative electrode sheet according to any one of claims 1 to 8, a side of the core close to a positive electrode is connected to the electrode pole via the current collecting plate, and the all-tab negative electrode sheet of the core is connected to the negative electrode case.

10. The cylindrical battery according to claim 9, wherein each of the tabs of the all-tab negative electrode sheet is welded to a bottom of the negative electrode case.

11. The all-tab negative electrode sheet according to claim 1, wherein each of the tab groups corresponds to a part of an edge of the electrode sheet body at a same side in a coating area, and a combination of all of the tab groups corresponds to an entire edge of the electrode sheet body at the same side in the coating area.

12. The all-tab negative electrode sheet according to claim 1, wherein there is no gap between any two adjacent ones of the tabs.

13. The all-tab negative electrode sheet according to claim 1, wherein there is a gap between at least two adjacent ones of the tabs of each of the tab groups.

14. The all-tab negative electrode sheet according to claim 1, wherein the electrode sheet body in the coating area in a length range corresponding to a part of the tab groups is connected to the tabs;
the electrode sheet body in the coating area in a length range corresponding to another part of the tab groups has a region that is not connected to the tabs.

15. The all-tab negative electrode sheet according to claim 1, wherein an entire region at an edge of the electrode sheet body in the coating area is connected to the tabs.

16. The all-tab negative electrode sheet according to claim 4, wherein a length of all of the tabs is same as that of the tabs of the first tab group.

17. The all-tab negative electrode sheet according to claim 4, wherein a part of the tabs have a same length.

18. The cylindrical battery according to claim 10, wherein a width of the tabs away from the center of the core is greater than that of the tabs adjacent to the center of the core.

19. The cylindrical battery according to claim 10, wherein welding spots are disposed at the center of the core.

20. The cylindrical battery according to claim 10, wherein a length of the tabs of the tab groups close to an outer circle of the core is less than that of the tabs of the tab groups away from the outer circle of the core.
